# EUROPEAN PATENT SPECIFICATION

(11) **EP 4 154 444 B1**
(45) Date of publication and mention of the grant of the patent: **25.06.2025**
(21) Application number: 21725317.8
(22) Date of filing: 22.04.2021
(51) Int. Cl.: H04L 1/00, H04L 5/00

(54) **CQI TABLE SELECTION IN SIDELINK**
CQI-TABELLENAUSWAHL IN SIDELINK
SÉLECTION DE TABLE CQI DANS UNE LIAISON LATÉRALE

(30) Priority: 23.05.2020 US 202063029466 P; 21.04.2021 US 202117236518
(43) Date of publication of application: 29.03.2023
(73) Proprietor: QUALCOMM INCORPORATED, San Diego, California 92121-1714 (US)
(72) Inventor: SARKIS, Gabi, San Diego, California 92121 (US); GULATI, Kapil, San Diego, California 92121 (US); NGUYEN, Tien Viet, San Diego, California 92121 (US); WU, Shuanshuan, San Diego, California 92121 (US)
(74) Representative: Reddie & Grose LLP
(86) International application number: PCT/US2021/028668
(87) International publication number: WO 2021/242456

(56) References cited:
- US-A1- 2018 234 206
- MEDIATEK INC: "Discussion on sidelink physical layer structure", vol. RAN WG1, no. e-Meeting; 20200525 - 20200605, 16 May 2020 (2020-05-16), XP051885456, Retrieved from the Internet <URL:https://ftp.3gpp.org/tsg_ran/WG1_RL1/TSGR1_101-e/Docs/R1-2003681.zip R1-2003681 Discussion on sidelink physical layer structure.docx> [retrieved on 20200516]
- VIVO: "Remaining issues on physical layer procedure for NR sidelink", vol. RAN WG1, no. Online Meeting ;20200420 - 20200430, 10 April 2020 (2020-04-10), XP051873262, Retrieved from the Internet <URL:https://ftp.3gpp.org/tsg_ran/WG1_RL1/TSGR1_100b_e/Docs/R1-2001665.zip R1-2001665 SL procedure_final.docx> [retrieved on 20200410]
- MODERATOR (LG ELECTRONICS): "Feature lead summary#2 for AI 7.2.4.5 Physical layer procedures for sidelink", vol. RAN WG1, no. e-Meeting; 20200525 - 20200605, 4 June 2020 (2020-06-04), XP051893288, Retrieved from the Internet <URL:https://ftp.3gpp.org/tsg_ran/WG1_RL1/TSGR1_101-e/Docs/R1-2004930.zip R1-2004930 FL summary #2 SL PHY procedure.docx> [retrieved on 20200604]

## Description

### BACKGROUND

### Technical Field

The present disclosure relates generally to communication systems, and more particularly, to wireless communication based on sidelink.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. Aspects of wireless communication may comprise direct communication between devices based on sidelink, such as vehicle-to-everything (V2X) or other device-to-device (D2D) communication. There exists a need for further improvements in sidelink communication. These improvements may also be applicable to other multi-access technologies and the telecommunication standards that employ these technologies.

US2018/0234206 describes a system and method for improving downlink spectrum efficiency. A higher order modulation transmission may be configured to be indicated by the network or a device. Multiple modulation and coding scheme (MCS) tables, transport block size (TSB) tables, and/or channel quality index (CQI) tables may be provided to support the higher order modulation transmission.

R1-2003681 "Discussion on sidelink physical layer structure" by Media Tek In. at 3GPP TSG RAN WG1 #101, e-meeting May 25-June 5 2020 discusses 2^{nd} SCI design w/wo CRC scrambled by Dest L1-ID and CQI table indication for triggered CSI reports and includes a proposal that (2^{nd}) SCI can indicate the CQI table assumed for the triggered CSI reports.

R1-2001665 "Remaining issues on physical layer procedure for NR sidelink", vivo, at 3GPP TSG RAN WG1 #100bis Meeting, e-meeting, April 20-30 2020 at section 3 SCI acquisition subsection 3.2 MCS and CQI table determination proposes that only a single MCS table (and the associated CQI table) can be configured per resource pool.

### SUMMARY

The invention is defined in the appended independent claims. Optional features are defined in the dependent claims.

The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system.
FIG. 2 illustrates example aspects of a sidelink slot structure.
FIG. 3 is a diagram illustrating an example of a first device and a second device involved in wireless communication based on sidelink.
FIG. 4 illustrates an example of sidelink communication between wireless devices.
FIG. 5 is an example communication flow between wireless device including a CSI report over sidelink.
FIG. 6 is a flowchart of a method of wireless communication that includes the determination of a CQI table for a CSI report over sidelink.
FIG. 7 is a flowchart of a method of wireless communication that includes triggering a CSI report over sidelink.
FIG. 8 is a diagram illustrating an example of a hardware implementation for an example apparatus that supports a CSI report over sidelink.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

A base station may configure the UE with a CSI configuration for the UE to use when transmitting CSI reports. The configuration may include a CQI table for the UE to use in connection with the CSI report. In contrast to a CSI report configured by a base station, in sidelink communication, there may be a single CSI report configuration for a unicast link between two UEs. Aspects presented herein enable a UE that is triggere d to send an aperiodic CSI report over sidelink to determine a CQI table to use for with the CSI report. The aspects may enable different CQI tables to be applied for different CSI reports even though there may be a single CSI report configuration for sidelink unicast communication.

As presented herein, the UE may receive an indication over sidelink of an MCS table for sidelink communication with another UE. The UE may receive the indication for the MCS table in a first portion of sidelink control information, e.g., which may be referred to as a first stage SCI or SCI-1. The UE may receive a trigger for providing a CSI report over sidelink. The aperiodic CSI report may be triggered by a second portion of SCI, e.g., which may be referred to as a second stage SCI or SCI-2. The UE may determine the CQI table to apply for the CSI report over sidelink based on the MCS table indicated in the first stage SCI.

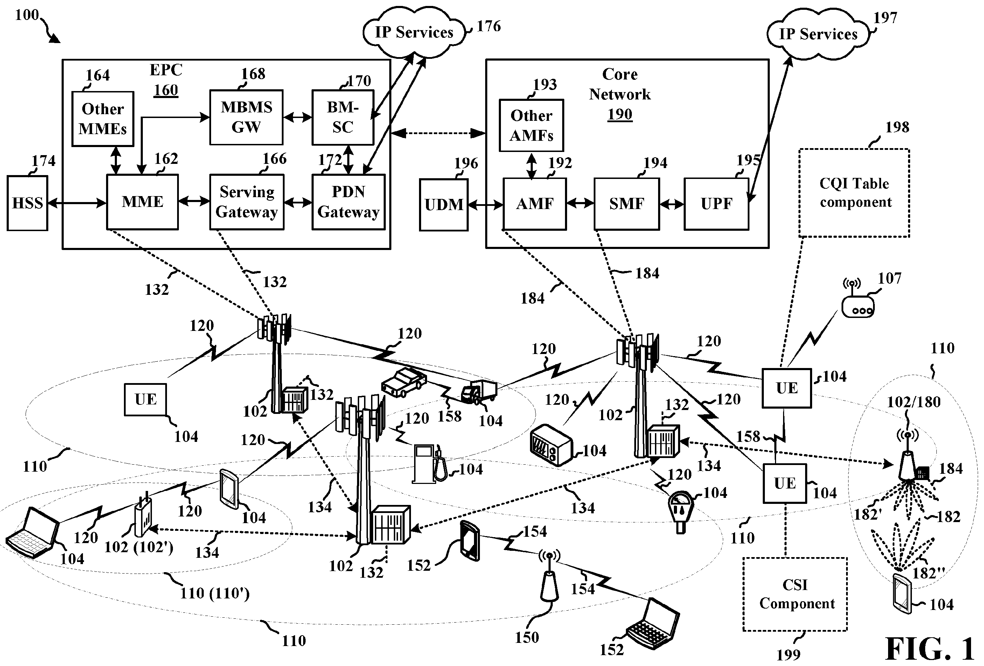

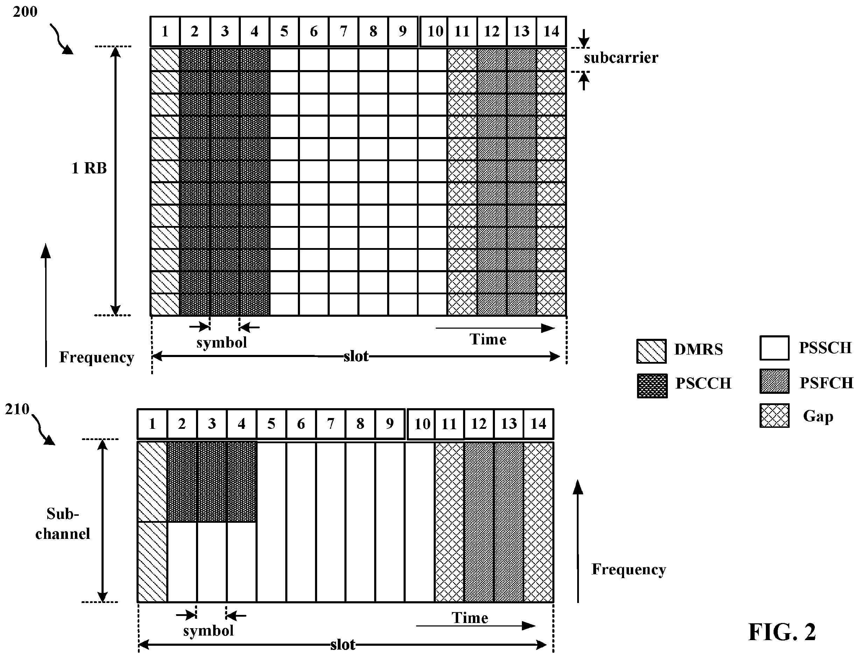

FIG. 1 is a diagram illustrating an example of a wireless communications system and an access network 100. Some wireless communication may be exchanged directly between wireless devices, e.g., over sidelink or a PC5 interface. Among other examples, sidelink communication may include vehicle-based communication devices that can communicate from vehicle-to-vehicle (V2V), vehicle-to-infrastructure (V2I) (e.g., from the vehicle-based communication device to road infrastructure nodes such as a Road Side Unit (RSU)), vehicle-to-network (V2N) (e.g., from the vehicle-based communication device to one or more network nodes, such as a base station), vehicle-to-pedestrian (V2P), cellular vehicle-to-everything (C-V2X), and/or a combination thereof and/or with other devices, which can be collectively referred to as vehicle-to-anything (V2X) communications. Referring again to FIG. 1, in certain aspects, a UE 104, e.g., a transmitting Vehicle User Equipment (VUE) or other UE, may be configured to transmit messages directly to another UE 104. The communication may be based on V2X or other D2D communication, such as Proximity Services (ProSe), etc. Communication based on V2X and/or D2D may also be transmitted and received by other transmitting and receiving devices, such as Road Side Unit (RSU) 107, etc. Aspects of the communication may be based on PC5 or sidelink communication e.g., as described in connection with the example in FIG. 2.

In some aspects, the UE 104 may include a CQI table component 198 configured to receive a first set of control information, e.g., in a first portion of SCI indicating an MCS table and a second set of control information triggering a CSI report, e.g., in a second portion of SCI, and to determine a CQI table for the CSI report based on the MCS table indicated in the first set of control information. The UE 104 that transmits the SCI may include a CSI component 199 configured to transmit the first set of control information indicating an MCS table and the second set of control information triggering a CSI report from a receiver. The CSI component 199 may be configured to receive the CSI report in response to the second set of control information and based on the CQI table associated with the MCS table indicated in the first set of control information.

The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-in put and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respectto DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency (RF) band (e.g., 3 GHz - 300 GHz) has extremely high path loss and a short range. Base stations / UEs may operate within one or more frequency range bands. The mmW base station 180 may utilize beamforming 182 with the UE 104 to compensate for the extremely high path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The concepts described herein may be applicable to sidelink. Aspects may be applicable to other similar areas, such as NR, LTE, LTE-A, CDMA, GSM, and other wireless technologies.

FIG. 2 includes diagrams 200 and 210 illustrating example aspects of slot structures that may be used for sidelink communication (e.g., between UEs 104, RSU 107, etc.). The slot structure may be within a 5G/NR frame structure in some examples. In other examples, the slot structure may be within an LTE frame structure. Although the following description may be focused on 5G NR, the concepts described herein may be applicable to other similar areas, such as LTE, LTE-A, CDMA, GSM, and other wireless technologies. The example slot structure in FIG. 2 is merely one example, and other sidelink communication may have a different frame structure and/or different channels for sidelink communication. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. Diagram 200 illustrates a single resource block of a single slot transmission, e.g., which may correspond to a 0.5 ms transmission time interval (TTI). A physical sidelink control channel may be configured to occupy multiple physical resource blocks (PRBs), e.g., 10, 12, 15, 20, or 25 PRBs. The PSCCH may be limited to a single sub-channel. A PSCCH duration may be configured to be 2 symbols or 3 symbols, for example. A sub-channel may comprise 10, 15, 20, 25, 50, 75, or 100 PRBs, for example. The resources for a sidelink transmission may be selected from a resource pool including one or more subchannels. As a non-limiting example, the resource pool may include between 1-27 subchannels. A PSCCH size may be established for a resource pool, e.g., as between 10-100 % of one subchannel for a duration of 2 symbols or 3 symbols. The diagram 210 in FIG. 2 illustrates an example in which the PSCCH occupies about 50% of a subchannel, as one example to illustrate the concept of PSCCH occupying a portion of a subchannel. The physical sidelink shared channel (PSSCH) occupies at least one subchannel. The PSCCH may include a first portion of sidelink control information (SCI), and the PSSCH may include a second portion of SCI in some examples.

A resource grid may be used to represent the frame structure. Each time slot may include a resource block (RB) (also referred to as physical RBs (PRBs)) that extends 12 consecutive subcarriers. The resource grid is divided into multiple resource elements (REs). The number of bits carried by each RE depends on the modulation scheme. As illustrated in FIG. 2, some of the REs may comprise control information in PSCCH and some REs may comprise demodulation RS (DMRS). At least one symbol may be used for feedback. FIG. 2 illustrates examples with two symbols for a physical sidelink feedback channel (PSFCH) with adjacent gap symbols. A symbol prior to and/or after the feedback may be used for turnaround between reception of data and transmission of the feedback. The gap enables a device to switch from operating as a transmitting device to prepare to operate as a receiving device, e.g., in the following slot. Data may be transmitted in the remaining REs, as illustrated. The data may comprise the data message described herein. The position of any of the data, DMRS, SCI, feedback, gap symbols, and/or LBT symbols may be different than the example illustrated in FIG. 2. Multiple slots may be aggregated together in some aspects.

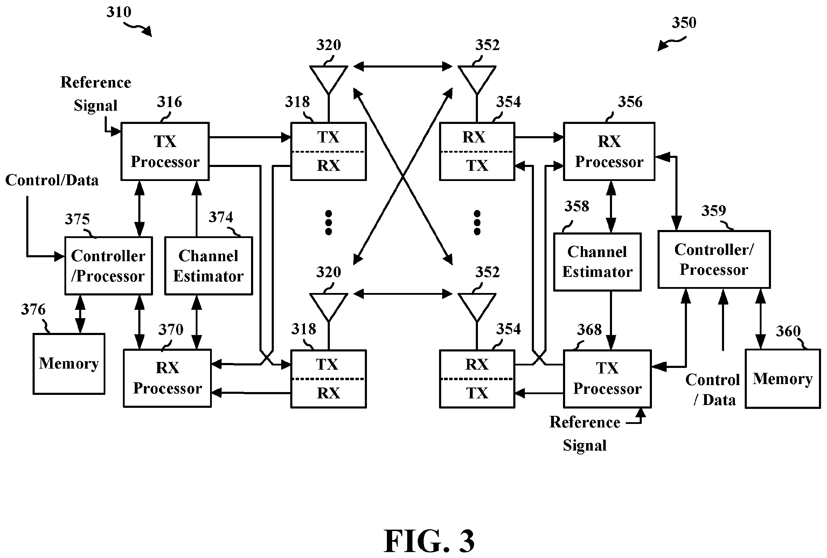

FIG. 3 is a block diagram of a first wireless communication device 310 in communication with a second wireless communication device 350. In some examples, the devices 310 and 350 may communicate based on sidelink using a PC5 interface. The devices 310 and the 350 may comprise a UE, an RSU, a base station, etc. Packets may be provided to a controller/processor 375 that implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the device 350. Each spatial stream may then be provided to a different antenna 320 via a separate transmitter 318TX. Each transmitter 318TX may modulate an RF carrier with a respective spatial stream for transmission.

At the device 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the device 350. If multiple spatial streams are destined for the device 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by device 310. These soft decisions may be based on channel estimates computed by the channel estimator 358. The soft decisions are then decoded and deinterleaved to recover the data and control signals that were originally transmitted by device 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. The controller/processor 359 may provide demultiplexing between transport and logical channels, packet reassembly, deciphering, header decompression, and control signal processing. The controller/processor 359 is also responsible for error detection using an ACK and/or NACK protocol to support HARQ operations.

Similar to the functionality described in connection with the transmission by device 310, the controller/processor 359 may provide RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by device 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The transmission is processed at the device 310 in a manner similar to that described in connection with the receiver function at the device 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. The controller/processor 375 provides demultiplexing between transport and logical channels, packet reassembly, deciphering, header decompression, control signal processing. The controller/processor 375 is also responsible for error detection using an ACK and/or NACK protocol to support HARQ operations.

At least one of the TX processor 368, the RX processor 356, and the controller/processor 359 may be configured to perform aspects in connection with the CQI table component 198 of FIG. 1.

At least one of the TX processor 316, the RX processor 370, and the controller/processor 375 may be configured to perform aspects in connection with the CSI component 199 of FIG. 1.

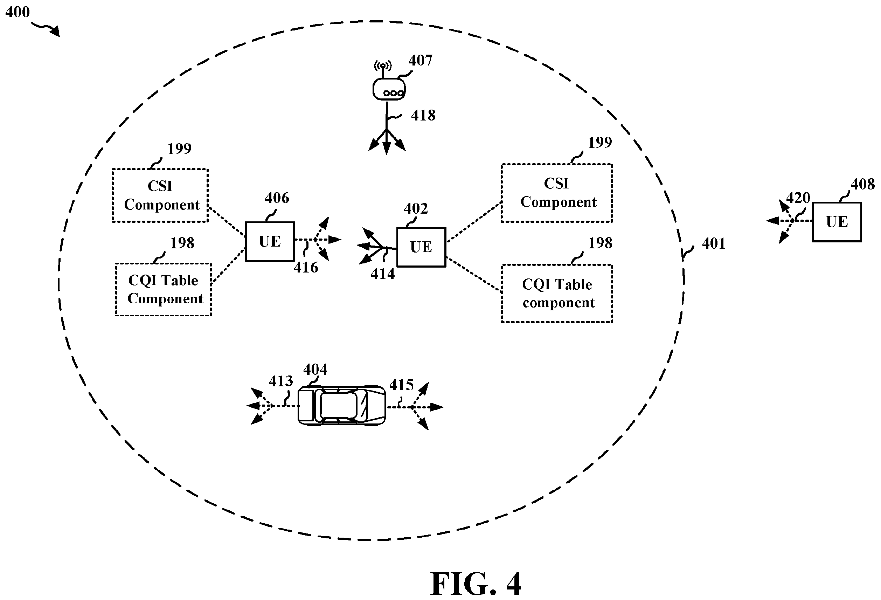

FIG. 4 illustrates an example 400 of wireless communication between devices based on V2X or other D2D communication. The communication may be based on a slot structure comprising aspects described in connection with FIG. 2. For example, the UE 402 may transmit a sidelink transmission 414, e.g., comprising a control channel (e.g., PSCCH) and/or a corresponding data channel (e.g., PSSCH), that may be received by UEs 404, 406, 408. A control channel may include information (e.g., sidelink control information (SCI)) for decoding the data channel including reservation information, such as information about time and/or frequency resources that are reserved for the data channel transmission. For example, the SCI may indicate a number of TTIs, as well as the RBs that will be occupied by the data transmission. The SCI may also be used by receiving devices to avoid interference by refraining from transmitting on the reserved resources. The UEs 402, 404, 406, 408 may each be capable of sidelink transmission in addition to sidelink reception. Thus, UEs 404, 406, 408 are illustrated as transmitting sidelink transmissions 413, 415, 416, 420. The sidelink transmissions 413, 414, 415, 416, 420 may be unicast, broadcast or multicast to nearby devices. For example, UE 404 may transmit communication 413, 415 intended for receipt by other UEs within a range 401 of UE 404, and UE 406 may transmit communication 416. Additionally/alternatively, RSU 407 may receive communication from and/or transmit communication 418 to UEs 402, 404, 406, 408.

Sidelink communication may be based on different types or modes of resource allocation mechanisms. In a first resource allocation mode (which may be referred to herein as "Mode 1"), centralized resource allocation may be provided by a network entity. For example, a base station 102 or 180 may determine resources for sidelink communication and may allocate resources to different UEs 104 to use for sidelink transmissions. In this first mode, a UE receives the allocation of sidelink resources from the base station 102 or 180. In a second resource allocation mode (which may be referred to herein as "Mode 2"), distributed resource allocation may be provided. In Mode 2, each UE may autonomously determine resources to use for sidelink transmission. In order to coordinate the selection of sidelink resources by individual UEs, each UE may use a sensing technique to monitor for resource reservations by other sidelink UEs and may select resources for sidelink transmissions from unreserved resources. Devices communicating based on sidelink, may determine one or more radio resources in the time and frequency domain that are used by other devices in order to select transmission resources that avoid collisions with other devices. The sidelink transmission and/or the resource reservation may be periodic or aperiodic, where a UE may reserve resources for transmission in a current slot and up to two future slots.

The UEs may transmit SCI in two stages. A first portion of SCI, or a first stage of SCI may be transmitted in the PSCCH. The first portion of SCI may be referred to as SCI-1. The second portion of the SCI, or the second stage of the SCI, may be transmitted in a PSSCH. The second portion of the SCI may be referred to as SCI-2. The SCI-1, e.g., transmitted on the PSCCH, may include information for resource allocation and decoding the SCI-2. The SCI-2, e.g., transmitted on the PSSCH, may include information for decoding data. The SCI-1 may be decodable by all UEs whereas some UEs may not be capable of decoding the SCI-2. The SCI-1 may include one or more of priority information (e.g., a quality of service QoS value), a PSSCH resource assignment (such as frequency and time resource assignment for PSSCH), a resource reservation period, a PSSCH DMRS pattern, a format information of SCI-2 (such as size information), an offset for SCI-2 control resource allocation, an indication of a number of PSSCH DMRS ports, a modulation and coding scheme (MCS), or the like. The SCI-2 may include one or more of a HARQ process ID, a new data indicator (NDI), a source ID, a destination ID, a CSI report trigger, a Zone ID of transmitter and/or a communication range.

The UE 402, 404, 406, 408 or RSU 407 may comprise a CQI Table component 198 and/or a CSI component 199, as described in connection with FIG. 1. The UEs may use the CSI component 199 when requesting/receiving CSI reports from other UEs and may use the CQI table component 198 when transmitting CSI reports to a requesting UE. As the UEs may operate as a sidelink receiver and a sidelink transmitter, the UEs may include both components and may use the components based on whether the UE is transmitting sidelink communication or receiving sidelink communication.

Wireless communication may be based on a modulation and coding scheme that provides a code rate for data transmitted by a wireless device. The MCS may be based on a table. There may be multiple MCS tables. For example, for communication between a base station and a UE over a Uu interface with cyclic prefix - orthogonal frequency division multiplexing (CP-OFDM), there may be three MCS tables. A first table may include a 64-QAM MCS table. A second table may include a 256-QAM table. A third table may include a low spectral efficiency MCS table. Multiple MCS tables may also be used in sidelink communication.

For communication between a base station and a UE over the Uu interface, there are multiple CQI tables. A first CQI table includes a 64-QAM MCS table associated with a 10% block error rate (BLER) target. A second CQI table includes a 256 QAM table associated with a 10% BLER target. A third CQI table includes a low spectral efficiency CQI table associated with a 1e-5 BLER target. For communication over an Uu interface, a base station configures the UE with a CQI table for each CSI report configuration. For example, the base station may configure the UE for a CSI report in downlink control information that indicates the CQI table for the configured CSI report.

In contrast to a CSI report configured by a base station, in sidelink communication, there may be a single CSI report configuration for a unicast link between two UEs, e.g., between UE 402 and 406 in FIG. 4. The MCS table for communication may be signaled from one UE to the other UE in a first stage SCI (e.g., SCI-1). Periodic CSI reporting may not be supported for sidelink. Instead, an aperiodic CSI report may be triggered based on SCI received from another UE. For example, a second stage SCI (e.g., SCI-2) may include a trigger for an aperiodic sidelink report. Aspects presented herein enable a UE that is triggered to send an aperiodic CSI report over sidelink to determine a CQI table to use for the CSI report. The aspects may enable different CQI tables to be applied for different CSI reports even though there may be a single CSI report configuration for unicast communication between the two UEs.

As presented herein, the UE that is triggered to send the CSI report may determine the CQI table for the CSI report based on an MCS table indication in SCI. The SCI may be associated with the triggered CSI report. For example, the SCI may comprise the CSI report trigger. As an example, the MCS table indication may be received in a first set of control information (such as SCI-1), and the CSI trigger may be received in a second set of control information (such as SCI-2). The UE may use an association or relationship between the control information to determine the CQI table, for reporting CSI in the CSI report, based on the MCS of the associated control information.

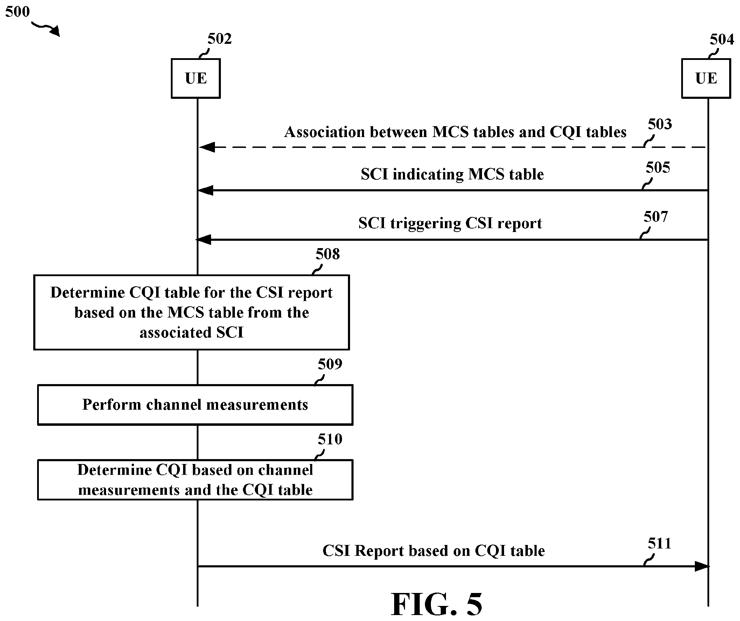

FIG. 5 illustrates an example communication flow 500 between a UE 502 and a UE 504 that includes the transmission of an aperiodic CSI report over sidelink. The UE 504 sends SCI-1 505 indicating an MCS table to the UE 502. In some aspects, the UE 504 may have a unicast link with the UE 502. In other aspects, the UE 504 may broadcast or groupcast the SCI-1 to nearby UEs including the UE 502. The UE 504 then transmits the SCI-2 507 with an indication for the UE 502 to provide a CSI report. The SCI-2 may be referred to as triggering an aperiodic CSI report by the UE 502. In response to receiving the SCI-2 507, the UE 502 performs channel measurements, at 509, and calculates the CSI. For example, at 510, the UE may determine a CQI based on the channel measurements performed at 509 and the CQI table determined at 508. For example, the UE 502 may measure one or more of an achievable spectral efficiency (and indicated as a channel quality index (CQI), a rank of the channel (and indicated as a rank indicator (RI)), and a precoder that achieves the peak spectral efficiency (and indicated as a precoder matrix index (PMI)). The UE 502 reports the CSI, including the CQI, to the UE 504 in a CSI report 511. For example, the CSI report may include an indicator that carries information about the channel quality. The indicator may include an index from a CQI table. The CQI table may include entries based on modulation, code rate, and efficiency. The CQI table shown here provides one example MCS table to illustrate the concept. Based on the channel measurements and the MCS table indicated in the SCI-1, the UE may determine an index from the table that represents the measured channel quality and may include the index in the CSI report 511. The use of the index from the CQI table enables the UE to report a quantized value for the observed channel quality. As illustrated at 508, the UE 502 determines the CQI table to use for the CSI report 511 based on the MCS table indicated in the SCI-1, e.g., the SCI-1 that is associated with the SCI-2 that triggered the CSI report.

**CQI Table 2**

| **CQI index** | **modulation** | **code rate x 1024** | **efficiency** |
|---|---|---|---|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

According to the invention, there are multiple CQI tables, and the UE 502 determines which of the CQI tables to use for the CSI report based on the MCS table indicated in the SCI-1.

Each of the multiple MCS tables is associated with a particular CQI table. The association may be defined, in some examples. As an example, the association between an MCS table and a CQI table may be defined in a standard. In other examples, the association may be configured, e.g., over PC5-RRC signaling. For example, as illustrated in FIG. 5, an association between the MCS tables and the CQI tables may be indicated in PC5-RRC signaling, at 503. As an example, a low spectral efficiency 64 QAM MCS table may be associated with a low spectral efficiency 64 QAM CQI table. A regular 64 QAM MCS table may be associated with a regular 64 QAM CQI table. A 256 QAM MCS table may be associated with a 256 QAM CQI table.

Different SCI-1 from the UE 504 may indicate different MCS tables. As the UE 502 uses the MCS table indicated in the SCI-1 to determine the CQI table for reporting CSI, the UE 502 uses different CQI tables for a CSI report triggered in SCI-2 that is associated with SCI-1 indicating different MCS tables.

The BLER target may be based on the CQI table, e.g., the CQI table determined by the UE at 508.

The aspects presented herein enable the CQI table to be determined by the UE 502 without signaling the CQI table to the UE 502, which improves the efficient use of wireless resources and reduced the amount of signaling between the two UEs. Additionally, the manner of determining the CQI table presented in FIG. 5 enables different CQI tables to be used for different CSI reports even if there is a single CSI configuration for the sidelink unicast between two UEs. The CQI table may be updated in RRC signaling. However, the aspects presented in FIG. 5 enable the CQI table to updated when the MCS table changes and without an RRC reconfiguration.

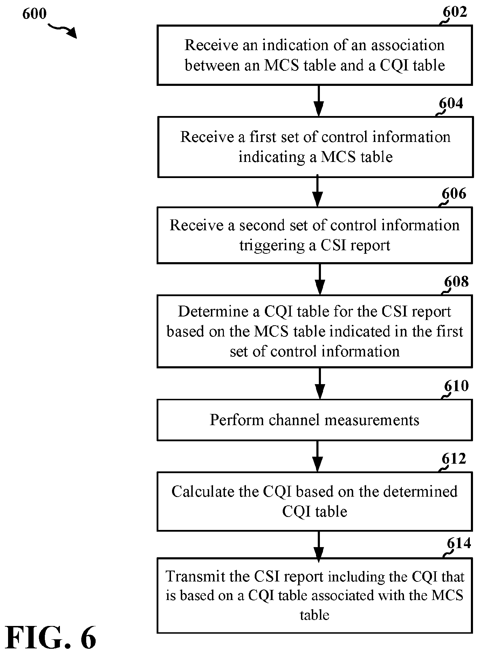

FIG. 6 is a flowchart 600 of a method of wireless communication. The method may be performed by a wireless device that communications based on sidelink. In some examples, the method may be performed by a UE (e.g., the UE 104, 402, 406, 502; the wireless device 350; the apparatus 802). One or more aspects illustrated in FIG. 6 may be optional. Various implementations may include a method with any combination of the aspects described in connection with FIG. 6. The aspects presented herein may enable the use of different CQI tables for sidelink CSI reports.

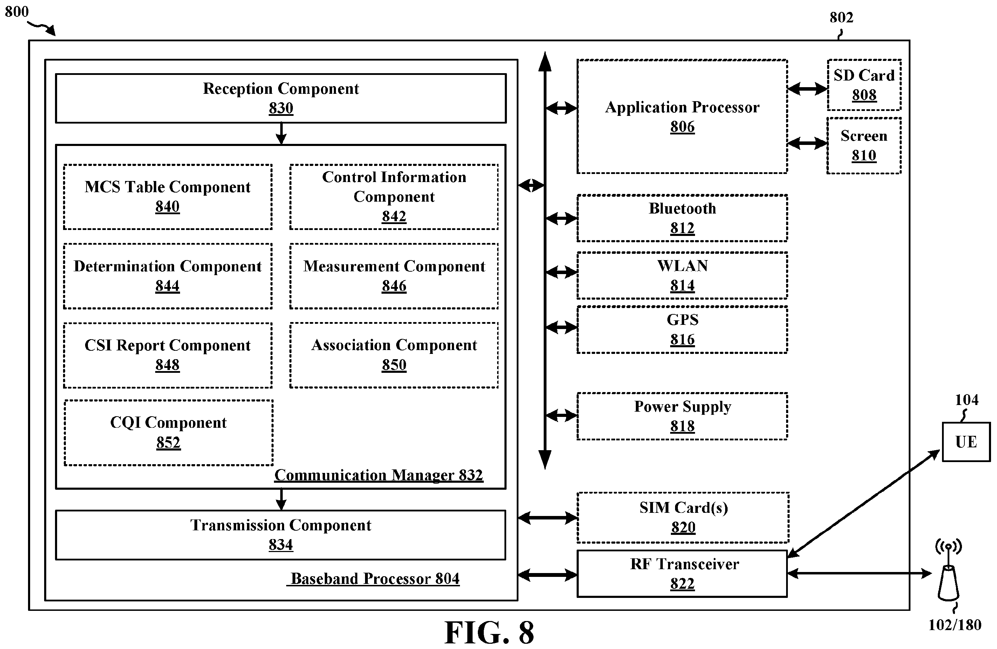

At 604, the wireless device receives a first set of control information indicating an MCS table. The first set of control information is received in a first portion of SCI, such as SCI-1 received on a PSCCH. The first portion of SCI is referred to as a first stage SCI. The first set of control information may include aspects described in connection with 505 in FIG. 5. The reception of the first set of control information may be performed by the MCS Table component 840 of the apparatus 802 in FIG. 8, for example.

At 606, the wireless device receives a second set of control information triggering a CSI report. The second set of control information may comprise a second portion of the SCI associated with the first portion of the SCI, e.g., SCI-2 that is received on a PSSCH. The second portion of the SCI is referred to as a second stage SCI. The second stage of the SCI is associated with the first stage of the SCI, e.g., that indicated the MCS table. The second set of control information may include aspects described in connection with 507 in FIG. 5. The reception of the second set of control information may be performed by the control information component 842 of the apparatus 802 in FIG. 8, for example.

At 608, the wireless device determines a CQI table for the CSI report, e.g., a sidelink CSI report, based on the MCS table indicated in the first set of control information, i.e., first stage SCI. The determination may include aspects described in connection with 508 in FIG. 5. The determination may be performed, for example, by the determination component 844 of the apparatus 802 in FIG. 8. A BLER target for the CSI report may be based on the determined CQI table.

In response to receiving the second set of control information that triggers the CSI report, the wireless device may perform channel measurements in response to the second set of control information that triggers the CSI report, at 610. For example, the wireless device may measure one or more of an achievable spectral efficiency (and indicated as a channel quality index (CQI), a rank of the channel (and indicated as a rank indicator (RI)), and a precoder that achieves the peak spectral efficiency (and indicated as a precoder matrix index (PMI)). The measurements may be performed by the measurement component 846 of the apparatus 802 in FIG. 8, for example.

At 612, the wireless device calculates the CQI to be indicated in the CSI report, e.g., based on the channel measurements and the determined CQI table. For example, the wireless device may determine a CQI index in the determined CQI table based on the measurements, the MCS, etc. The calculation may be determined by the CSI report component 848 of the apparatus 802 in FIG. 8, for example.

At 614, the wireless device transmits the CSI report including CQI that is based on a CQI table associated with the MCS table indicated in the first set of control information. The CSI report may be transmitted over sidelink and may include a reference to an index from the determined CQI table, such as described in connection with FIG. 5. Thus, the CSI report may indicate the CQI based on an index of the corresponding CQI table, e.g., determined at 608. The transmission of the CSI report may be performed, e.g., by the transmission component 834 of the apparatus 802 in FIG. 8.

As illustrated at 602, the wireless device may receive an indication of an association between the MCS table and the CQI table. The indication may include aspects described in connection with 503 in FIG. 5. The indication may be performed, e.g., by the association component 850 of the apparatus 802 in FIG. 8. The indication may be received in PCS-RRC signaling. The wireless device may receive a mapping between multiple MCS tables and multiple CQI tables.

In other examples, the association between the MCS table and the CQI table may be defined and may be known by both the transmitting wireless device and the receiving wireless device. Thus, the wireless device may determine the CQI table, at 608, based on the defined association between the MCS table and the CQI table.

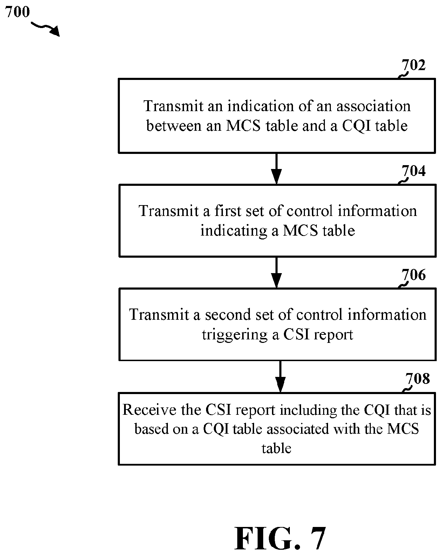

FIG. 7 is a flowchart 700 of a method of wireless communication. The method may be performed by a wireless device that communications based on sidelink. In some examples, the method may be performed by a UE (e.g., the UE 104; the apparatus 802). One or more aspects illustrated in FIG. 7 may be optional. Various implementations may include a method with any combination of the aspects described in connection with FIG. 7. The aspects presented herein may enable the use of different CQI tables for sidelink CSI reports.

A 704, the wireless device transmits a first set of control information indicating an MCS table. The first set of control information is transmitted in a first portion of SCI, SCI-1 transmitted on a PSCCH. The first portion of SCI is referred to as a first stage SCI. The first set of control information may include aspects described in connection with 505 in FIG. 5. The transmission of the first set of control information may be performed by the MCS Table component 840 of the apparatus 802 in FIG. 8, for example.

At 706, the wireless device transmits a second set of control information triggering a CSI report from a receiver. A CQI table for the CSI report is based on the MCS table indicated in the first set of control information. The second set of control information comprises a second portion of the SCI associated with the first portion of the SCI, i.e., SCI-2 that is transmitted on a PSSCH. The second portion of SCI is referred to as a second stage SCI. The second set of control information may include aspects described in connection with 507 in FIG. 5. The transmission of the second set of control information may be performed by the control information component 842 of the apparatus 802 in FIG. 8, for example.

At 708, the wireless device receives the CSI report including CQI that is based on the CQI table associated with the MCS table indicated in the first set of control information. The CSI report may be received over sidelink and may indicate the CQI based on an index of the corresponding CQI table, such as described in connection with FIG. 5. The reception of the CSI report may be performed, e.g., by the reception component 830 of the apparatus 802 and/or the CSI report component 848 in FIG. 8. A BLER target for the CSI report may be based on the determined CQI table.

As illustrated at 702, the wireless device may transmit an indication of an association between the MCS table and the CQI table. The indication may include aspects described in connection with 503 in FIG. 5. The indication may be performed, e.g., by the association component 850 of the apparatus 802 in FIG. 8. The indication may be transmitted in PCS-RRC signaling. The wireless device may indicate a mapping between multiple MCS tables and multiple CQI tables.

In other examples, the association between the MCS table and the CQI table may be defined and may be known by both the transmitting wireless device and the receiving wireless device.

FIG. 8 is a diagram 800 illustrating an example of a hardware implementation for an apparatus 802. The apparatus 802 may be a UE, or other device that communicate s based on sidelink. The device includes a baseband processor 804 (also referred to as a modem) coupled to a RF transceiver 822. In some aspects, the baseband processor 804 may be a cellular baseband processor, and the RF transceiver 822 may be a cellular RF transceiver. The apparatus may further include one or more subscriber identity modules (SIM) cards 820, an application processor 806 coupled to a secure digital (SD) card 808 and a screen 810, a Bluetooth module 812, a wireless local area network (WLAN) module 814, a Global Positioning System (GPS) module 816, and/or a power supply 818. The baseband processor 804 communicates through the RF transceiver 822 with the UE 104 and/or BS 102/180. The baseband processor 804 may include a computer-readable medium / memory. The baseband processor 804 is responsible for general processing, including the execution of software stored on the computer-readable medium / memory. The software, when executed by the baseband processor 804, causes the baseband processor 804 to perform the various functions described *supra.* The computer-readable medium / memory may also be used for storing data that is manipulated by the baseband processor 804 when executing software. The baseband processor 804 further includes a reception component 830, a communication manager 832, and a transmission component 834. The communication manager 832 includes the one or more illustrated components. The components within the communication manager 832 may be stored in the computer-readable medium / memory and/or configured as hardware within the baseband processor 804. The baseband processor 804 may be a component of the device 350 and may include the memory 360 and/or at least one of the TX processor 368, the RX processor 356, and the controller/processor 359. In one configuration, the apparatus 802 may be a modem chip and include just the baseband processor 804, and in another configuration, the apparatus 802 may be the entire UE (e.g., see 350 of FIG. 3) and include the additional modules of the apparatus 802.

The communication manager 832 includes an MCS table component 840, a control information component 842, a determination component 844, a measurement component 846, a CSI report component 848, and an association component 850 configured to perform the aspects described in connection with FIGs. 5-7. For example, the MCS table component 840 may be configured to receive or transmit a first set of control information indicating an MCS table, e.g., as described in connection with 604 or 704 in FIG. 6 or FIG. 7. The apparatus 802 may further include a control information component 842 configured to receive or transmit a second set of control information triggering a CSI report, e.g., as described in connection with 606 or 706 in FIG. 6 or FIG. 7. The apparatus 802 further includes a CSI report component 848 configured to receive or transmit the CSI report including CQI that is based on a CQI table associated with the MCS table indicated in the first set of control information, e.g., as described in connection with 614 or 708 in FIG. 6 or FIG. 7. The apparatus may further include a determination component 844 configured to determine the CQI table based on the defined association between the MCS table and the CQI table, e.g., as described in connection with 608 in FIG. 6. The apparatus may further include a measurement component 846 configured to perform channel measurements in response to the second set of control information that triggers the CSI report, e.g., as described in connection with 610 in FIG. 6. The apparatus 802 may further include a CQI component 852 configured to calculate the CQI, for indication in the CSI report, based on the CQI table, e.g., determined by the determination component 844, e.g., as described in connection with 612 in FIG. 6. The apparatus 802 may further include an association component 850 configured to receive or transmit an indication of an association between an MCS table and a CQI table, e.g., as described in connection with 602 or 702 in FIG. 6 or FIG. 7. In other aspects, the association between the MCS table and the CQI table may be defined.

The apparatus may include additional components that perform each of the blocks of the algorithm in the flowcharts of FIGs. 6 and/or 7, as well as the aspects described in connection with the communication flow in FIG. 5. As such, each block in the flowcharts of FIGs. 6 and/or 7, as well as the aspects described in connection with the communication flow in FIG. 5, may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 802 may include a variety of components configured for various functions. In one configuration, the apparatus 802, and in particular the baseband processor 804, includes means for receiving a first set of control information indicating an MCS table. The apparatus 802 may include means for receiving a second set of control information triggering a CSI report, and means for transmitting the CSI report including the CQI that is based on a CQI table associated with the MCS table indicated in the first set of control information. The apparatus 802 may further include means for determining a CQI table for the CSI report based on the MCS table indicated in the first set of control information. The apparatus 802 may further include means for performing channel measurements in response to the second set of control information that triggers the CSI report, and means for calculating the CQI report based on the determined CQI table. The apparatus 802 may further include means for receiving an indication of an association between the MCS table and the CQI table. The apparatus 802 may further include transmitting a first set of control information indicating an MCS table and means for transmitting a second set of control information triggering a CSI report from a receiver, where a CQI table for the CSI report is based on the MCS table indicated in the first set of control information. The apparatus 802 may further include means for receiving the CSI report in response to the second set of control information and based on the CQI table associated with the MCS table indicated in the first set of control information. The apparatus 802 may further include means for transmitting an indication of an association between the MCS table and the CQI table. The means may be one or more of the components of the apparatus 802 configured to perform the functions recited by the means, e.g., such as described in connection with the algorithm in FIG. 6 or FIG. 7. As described *supra,* the apparatus 802 may include the TX Processor 368, the RX Processor 356, and the controller/processor 359. As such, in one configuration, the means may be the TX Processor 368, the RX Processor 356, and the controller/processor 359 configured to perform the functions recited by the means.

Aspects presented herein enable a UE that is triggered to send an aperiodic CSI report over sidelink to determine a CQI table to use for with the CSI report. The aspects may enable different CQI tables to be applied for different CSI reports even though there may be a single CSI report configuration for sidelink unicast communication. As presented herein, the UE may receive an indication over sidelink of an MCS table for sidelink communication with another UE. The UE may receive the indication for the MCS table in a first portion of sidelink control information, e.g., which may be referred to as a first stage SCI or SCI-1. The UE may receive a trigger for providing a CSI report over sidelink. The aperiodic CSI report may be triggered by a second portion of SCI, e.g., which may be referred to as a second stage SCI or SCI-2. The UE may determine the CQI table to apply for the CSI report over sidelink based on the MCS table indicated in the first stage SCI.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus for wireless communication at a wireless device (502), comprising:
means for
receiving (505) a first set of control information in a first stage of sidelink control information, SCI, the first set of control information indicating a modulation and coding scheme, MCS, table;
receiving (507) a second set of control information in a second stage of the SCI associated with the first stage, the second set of control information triggering a channel state information, CSI, report without indicating a channel quality indicator, CQI, table;
determining (508) the CQI table from multiple CQI tables based on a defined association between the MCS table indicated in the first stage of the SCI and the CQI table; and
transmitting (511) the CSI report triggered by the second stage of the SCI, the CSI report including a CQI that is based on the CQI table associated with the MCS table indicated in the first set of control information indicated in the first stage of the SCI.

2. The apparatus of claim 1, comprising means for performing channel measurements in response to the second set of control information that triggers the CSI report; and
calculating the CQI indicated in the CSI report based on the CQI table.

3. An apparatus for wireless communication at a wireless device (504), comprising:
means for
transmitting (505) a first set of control information in a first stage of sidelink control information, SCI, the first set of control information indicating a modulation and coding scheme, MCS, table;
transmitting (507) a second set of control information in a second stage of the SCI associated with the first stage, the second set of control information triggering a channel state information, CSI, report from a receiver without indicating a channel quality indicator, CQI, table; and
receiving (511) the CSI report triggered by the second stage of the SCI, the CSI report including a CQI based on the CQI table from multiple CQI tables, the CQI having a defined association with the MCS table indicated in the first set of control information comprised in the first stage of the SCI.

4. The apparatus of claim 2 or claim 3, wherein the CSI report indicates the CQI based on an index of a corresponding CQI table.

5. The apparatus of claim 1 or 3, wherein a block error rate, BLER, target for the CSI report is based on the CQI table.

6. The apparatus of claim 1 comprising means for receiving or the apparatus of claim 3 comprising means for transmitting an indication of an association between the MCS table and the CQI table.

7. The apparatus of claim 6, wherein the indication is in PC5 radio resource control, PC5-RRC, signaling.

8. The apparatus of claim 6, wherein the indication includes a mapping between multiple MCS tables and multiple CQI tables.

9. The apparatus of claim 1 or 3, further comprising a transceiver.

10. A method (600) of wireless communication at a wireless device, comprising:
receiving (604) a first set of control information in a first stage of sidelink control information, SCI, the first set of control information indicating a modulation and coding scheme, MCS, table,;
receiving (606) a second set of control information in a second stage of the SCI associated with the first stage, the second set of control information triggering a channel state information, CSI, report without indicating a channel quality indicator, CQI, table;
determining the CQI table from multiple CQI tables based on a defined association between the MCS table indicated in the first stage of the SCI and the CQI table; and
transmitting (614) the CSI report triggered by the second stage of the SCI, the CSI report including a CQI that is based on the CQI table associated with the MCS table indicated in the first set of control information indicated in the first stage of the SCI.

11. The method of claim 10, further comprising:
performing (610) channel measurements in response to the second set of control information that triggers the CSI report; and
calculating (612) the CQI indicated in the CSI report based on the CQI table.

12. A method (700) of wireless communication at a wireless device, comprising:
transmitting (704) a first set of control information in a first stage of sidelink control information, SCI, the first set of control information indicating a modulation and coding scheme, MCS, table;
transmitting (706) a second set of control information in a second stage of the SCI associated with the first stage, the second set of control information triggering a channel state information (CSI) report from a receiver without indicating a channel quality indicator, CQI, table; and
receiving (708) the CSI report triggered by the second stage of the SCI, the CSI report including a CQI based on the CQI table from multiple CQI tables, the CQI having a defined association with the MCS table indicated in the first set of control information comprised in the first stage of the SCI.

13. The method of claim 11 or claim 10, wherein the CSI report indicates the CQI based on an index of a corresponding CQI table.

14. The method of claim 10, wherein a block error rate, BLER, target for the CSI report is based on the CQI table.

## Patentansprüche

1. Vorrichtung zur drahtlosen Kommunikation an einem drahtlosen Gerät (502), die Folgendes umfasst:
Mittel zum
Empfangen (505) eines ersten Satzes von Steuerinformationen in einer ersten Stufe von SCI (Sidelink Control Information), wobei der erste Satz von Steuerinformationen eine MCS-(Modulation and Coding Scheme)-Tabelle angibt;
Empfangen (507) eines zweiten Satzes von Steuerinformationen in einer mit der ersten Stufe assoziierten zweiten Stufe der SCI, wobei der zweite Satz von Steuerinformationen einen CSI-(Channel State Information)-Bericht auslöst, ohne eine CQI-(Channel Quality Indicator)-Tabelle anzugeben;
Bestimmen (508) der CQI-Tabelle aus mehreren CQI-Tabellen auf der Basis einer definierten Assoziation zwischen der in der ersten Stufe der SCI angegebenen MCS-Tabelle und der CQI-Tabelle; und
Übertragen (511) des durch die zweite Stufe der SCI ausgelösten CSI-Berichts, wobei der CSI-Bericht einen CQI enthält, der auf der CQI-Tabelle basiert, die mit der MCS-Tabelle assoziiert ist, die im ersten Satz von in der ersten Stufe der SCI angegebenen Steuerinformationen angegeben ist.

2. Vorrichtung nach Anspruch 1, die Mittel umfasst zum
Durchführen von Kanalmessungen als Reaktion auf den zweiten Satz von Steuerinformationen, der den CSI-Bericht auslöst; und
Berechnen des im CSI-Bericht angegebenen CQI auf der Basis der CQI-Tabelle.

3. Vorrichtung zur drahtlosen Kommunikation an einem drahtlosen Gerät (504), die Folgendes umfasst:
Mittel zum
Übertragen (505) eines ersten Satzes von Steuerinformationen in einer ersten Stufe von SCI (Sidelink Control Information), wobei der erste Satz von Steuerinformationen eine MCS-(Modulation and Coding Scheme)-Tabelle angibt;
Übertragen (507) eines zweiten Satzes von Steuerinformationen in einer mit der ersten Stufe assoziierten zweiten Stufe der SCI, wobei der zweite Satz von Steuerinformationen einen CSI-(Channel State Information)-Bericht von einem Empfänger auslöst, ohne eine CQI-(Channel Quality Indicator)-Tabelle anzugeben; und
Empfangen (511) des durch die zweite Stufe der SCI ausgelösten CSI-Berichts, wobei der CSI-Bericht eine CQI auf der Basis der CQI-Tabelle aus mehreren CQI-Tabellen enthält, wobei die CQI eine definierte Assoziation zur MCS-Tabelle aufweist, die im ersten Satz von Steuerinformationen angegeben ist, die in der ersten Stufe der SCI enthalten sind.

4. Vorrichtung nach Anspruch 2 oder 3, wobei der CSI-Bericht die CQI auf der Basis eines Index einer entsprechenden CQI-Tabelle angibt.

5. Vorrichtung nach Anspruch 1 oder 3, wobei ein BLER-(Block Error Rate)-Ziel für den CSI-Bericht auf der CQI-Tabelle basiert.

6. Vorrichtung nach Anspruch 1, die Empfangsmittel umfasst, oder Vorrichtung nach Anspruch 3, die Mittel zum Übertragen einer Angabe einer Assoziation zwischen der MCS-Tabelle und der CQI-Tabelle umfasst.

7. Vorrichtung nach Anspruch 6, wobei die Angabe in PC5-RRC-(PC5 Radio Ressource Control)-Signalisierung erfolgt.

8. Vorrichtung nach Anspruch 6, wobei die Angabe eine Abbildung zwischen mehreren MCS-Tabellen und mehreren CQI-Tabellen umfasst.

9. Vorrichtung nach Anspruch 1 oder 3, die ferner einen Transceiver umfasst.

10. Verfahren (600) zur drahtlosen Kommunikation an einem drahtlosen Gerät, das Folgendes umfasst:
Empfangen (604) eines ersten Satzes von Steuerinformationen in einer ersten Stufe von SCI (Sidelink Control Information), wobei der erste Satz von Steuerinformationen eine MCS-(Modulation and Coding Scheme)-Tabelle angibt;
Empfangen (606) eines zweiten Satzes von Steuerinformationen in einer mit der ersten Stufe assoziierten zweiten Stufe der SCI, wobei der zweite Satz von Steuerinformationen einen CSI-(Channel State Information)-Bericht auslöst, ohne eine CQI-(Channel Quality Indicator)-Tabelle anzugeben;
Bestimmen der CQI-Tabelle aus mehreren CQI-Tabellen auf der Basis einer definierten Assoziation zwischen der in der ersten Stufe der SCI angegebenen MCS-Tabelle und der CQI-Tabelle; und
Übertragen (614) des durch die zweite Stufe der SCI ausgelösten CSI-Berichts, wobei der CSI-Bericht einen CQI enthält, der auf der CQI-Tabelle basiert, die mit der MCS-Tabelle assoziiert ist, die im ersten Satz von in der ersten Stufe der SCI angegebenen Steuerinformationen angegeben ist.

11. Verfahren nach Anspruch 10, das ferner Folgendes beinhaltet:
Durchführen (610) von Kanalmessungen als Reaktion auf den zweiten Satz von Steuerinformationen, der den CSI-Bericht auslöst; und
Berechnen (612) des im CSI-Bericht angegebenen CQI auf der Basis der CQI-Tabelle.

12. Verfahren (700) zur drahtlosen Kommunikation an einem drahtlosen Gerät, das Folgendes beinhaltet:
Übertragen (704) eines ersten Satzes von Steuerinformationen in einer ersten Stufe von SCI (Sidelink Control Information), wobei der erste Satz von Steuerinformationen eine MCS-(Modulation and Coding Scheme)-Tabelle angibt;
Übertragen (706) eines zweiten Satzes von Steuerinformationen in einer mit der ersten Stufe assoziierten zweiten Stufe der SCI, wobei der zweite Satz von Steuerinformationen einen CSI-(Channel State Information)-Bericht von einem Empfänger auslöst, ohne eine CQI-(Channel Quality Indicator)-Tabelle anzugeben; und
Empfangen (708) des durch die zweite Stufe der SCI ausgelösten CSI-Berichts, wobei der CSI-Bericht einen CQI auf der Basis der CQI-Tabelle aus mehreren CQI-Tabellen enthält, wobei die CQI eine definierte Assoziation zur MCS-Tabelle aufweist, die im ersten Satz von Steuerinformationen angegeben ist, die in der ersten Stufe der SCI enthalten sind.

13. Verfahren nach Anspruch 11 oder Anspruch 10, wobei der CSI-Bericht den CQI auf der Basis eines Index einer entsprechenden CQI-Tabelle angibt.

14. Verfahren nach Anspruch 10, wobei ein BLER-(Block Error Rate)-Ziel für den CSI-Bericht auf der CQI-Tabelle basiert.

## Revendications

1. Appareil de communication sans fil au niveau d'un dispositif sans fil (502), comprenant :
des moyens pour
recevoir (505) un premier ensemble d'informations de commande dans un premier stade d'informations de commande de liaison latérale, SCI, le premier ensemble d'informations de commande indiquant une table de plans de modulation et codage, MCS ;
recevoir (507) un second ensemble d'informations de commande dans un second stade des SCI associé au premier stade, le second ensemble d'informations de commande déclenchant un rapport d'informations d'état de canal, CSI, sans indiquer de table d'indicateurs de qualité de canal, CQI ;
déterminer (508) la table de CQI à partir de multiples tables de CQI sur la base d'une association définie entre la table de MCS indiquée dans le premier stade des SCI et la table de CQI ; et
transmettre (511) le rapport de CSI déclenché par le second stade des SCI, le rapport de CSI comprenant un CQI basé sur la table de CQI associée à la table de MCS indiquée dans le premier ensemble d'informations de commande indiqué dans le premier stade des SCI.

2. Appareil selon la revendication 1, comprenant des moyens pour réaliser des mesures de canal en réponse au second ensemble d'informations de commande qui déclenche le rapport de CSI ; et
calculer le CQI indiqué dans le rapport de CSI sur la base de la table de CQI.

3. Appareil de communication sans fil au niveau d'un dispositif sans fil (504), comprenant :
des moyens pour :
transmettre (505) un premier ensemble d'informations de commande dans un premier stade d'informations de commande de liaison latérale, SCI, le premier ensemble d'informations de commande indiquant une table de plans de modulation et codage, MCS ;
transmettre (507) un second ensemble d'informations de commande dans un second stade des SCI associé au premier stade, le second ensemble d'informations de commande déclenchant un rapport d'informations d'état de canal, CSI, par un récepteur sans indiquer de table d'indicateurs de qualité de canal, CQI ; et
recevoir (511) le rapport de CSI déclenché par le second stade des SCI, le rapport de CSI comportant un CQI basé sur la table de CQI de multiples tables de CQI, le CQI ayant une association définie avec la table de MCS indiquée dans le premier ensemble d'informations de commande compris dans le premier stade des SCI.

4. Appareil selon la revendication 2 ou la revendication 3, dans lequel le rapport de CSI indique le CQI sur la base d'un indice d'une table de CQI correspondante.

5. Appareil selon la revendication 1 ou 3, dans lequel un taux d'erreurs sur les blocs, BLER, cible pour le rapport de CSI est basé sur la table de CQI.

6. Appareil selon la revendication 1 ou 3, comprenant des moyens de réception ou appareil selon la revendication 3 comprenant des moyens de transmission d'une indication d'une association entre la table de MCS et la table de CQI.

7. Appareil selon la revendication 6, dans lequel l'indication se trouve dans une signalisation de commande de ressources radio PC5, PC5-RRC.

8. Appareil selon la revendication 6, dans lequel l'indication comprend une correspondance entre de multiples tables de MCS et de multiples tables de CQI.

9. Dispositif selon la revendication 1 ou 3, comprenant en outre un émetteur-récepteur.

10. Procédé (600) de communication sans fil au niveau d'un dispositif sans fil, comprenant :
la réception (604) d'un premier ensemble d'informations de commande dans un premier stade d'informations de commande de liaison latérale, SCI, le premier ensemble d'informations de commande indiquant une table de plans de modulation et codage, MCS ;
la réception (606) d'un second ensemble d'informations de commande dans un second stade des SCI associé au premier stade, le second ensemble d'informations de commande déclenchant un rapport d'informations d'état de canal, CSI, sans indiquer de table d'indicateurs de qualité de canal, CQI ;
la détermination de la table de CQI à partir de multiples tables de CQI sur la base d'une association définie entre la table de MCS indiquée au premier stade des SCI et la table de CQI ; et
la transmission (614) du rapport de CSI déclenché par le second stade des SCI, le rapport de CSI comprenant un CQI basé sur la table de CQI associée à la table de MCS indiquée dans le premier ensemble d'informations de commande indiqué dans le premier stade des SCI.

11. Procédé selon la revendication 10, comprenant en outre :
la réalisation (610) de mesures de canal en réponse au second ensemble d'informations de commande qui déclenche le rapport de CSI ; et
le calcul (612) du CQI indiqué dans le rapport de CSI sur la base de la table de CQI.

12. Procédé (700) de communication sans fil au niveau d'un dispositif sans fil, comprenant :
la transmission (704) d'un premier ensemble d'informations de commande dans un premier stade d'informations de commande de liaison latérale, SCI, le premier ensemble d'informations de commande indiquant une table de plans de modulation et codage, MCS ;
la transmission (706) d'un second ensemble d'informations de commande dans un second stade des SCI associé au premier stade, le second ensemble d'informations de commande déclenchant un rapport d'informations d'état de canal (CSI) par un récepteur sans indiquer de tables d'indicateurs de qualité de canal, CQI ; et
la réception (708) du rapport de CSI déclenché par le second stade des SCI, le rapport des CSI comprenant un CQI basé sur la table de CQI de multiples tables de CQI, le CQI ayant une association définie avec la table de MCS indiquée dans le premier ensemble d'informations de commande compris dans le premier stade des SCI.

13. Procédé selon la revendication 11 ou la revendication 10, dans lequel le rapport de CSI indique le CQI basé sur un indice d'une table de CQI correspondante.

14. Procédé selon la revendication 10, dans lequel un taux d'erreurs sur les blocs, BLER, cible pour le rapport de CSI est basé sur la table de CQI.
